Europäisches Patentamt

European Patent Office

Office européen des brevets

(11) Veröffentlichungsnummer: **0 289 988**

**A1**

(12) # EUROPÄISCHE PATENTANMELDUNG

(21) Anmeldenummer: 88107083.3

(22) Anmeldetag: 02.05.88

(51) Int. Cl.⁴: **E21B 7/28 , E21B 10/26 , E21B 10/58 , E21B 7/08 , B23B 51/00**

(30) Priorität: 05.05.87 DE 3714837

(43) Veröffentlichungstag der Anmeldung:
**09.11.88 Patentblatt 88/45**

(84) Benannte Vertragsstaaten:
**CH FR LI NL**

(71) Anmelder: **FRIEDRICH DUSS MASCHINENFABRIK GMBH & CO.**

**D-7625 Neubulach(DE)**

(72) Erfinder: **Duss, Otto-Eugen, Dipl.-Ing.**

**D-7265 Nubulach(DE)**
Erfinder: **Schroth, Gerhard**
**Dr. Klein-Strasse 40**
**D-7265 Neubulach(DE)**

(74) Vertreter: **Mayer, Friedrich, Dr.**
**Patentanwälte Dr. Mayer & Frank Westliche 24**
**D-7530 Pforzheim(DE)**

(54) **Rotierbares Werkzeug zur Herstellung einer Hinterschneidung in einem Bohrloch.**

(57) Das Werkzeug arbeitet über ein Treibprofil mit einer Gleitfläche (21a) des Bohrloches (11g) zusammen, wobei im Gefolge des axialen Arbeitsdruckes auf das kreisende Werkzeug der radiale Räumvorschub des Hinterschneidorgans (16g) erzeugt wird. Beim Hinterschneidvorgang gelangt die Achse (15g) des Werkzeuges aus seiner Ausgangsstellung, in welcher sie sich im Abstand von der Bohrlochachse befindet in eine Endstellung, in welcher sie etwa in der Bohrlochachse liegt. Das Treibprofil ist durch die Stirnfläche eines gesonderten, in den Schaft (14g) eingebetteten und aus diesem axial vorspringenden Treibelementes gebildet. Ein die Gleitfläche bildender Lagerkörper (25g) ist bedarfsweise unter Zentrierung in das Bohrloch (11g) einfügbar.

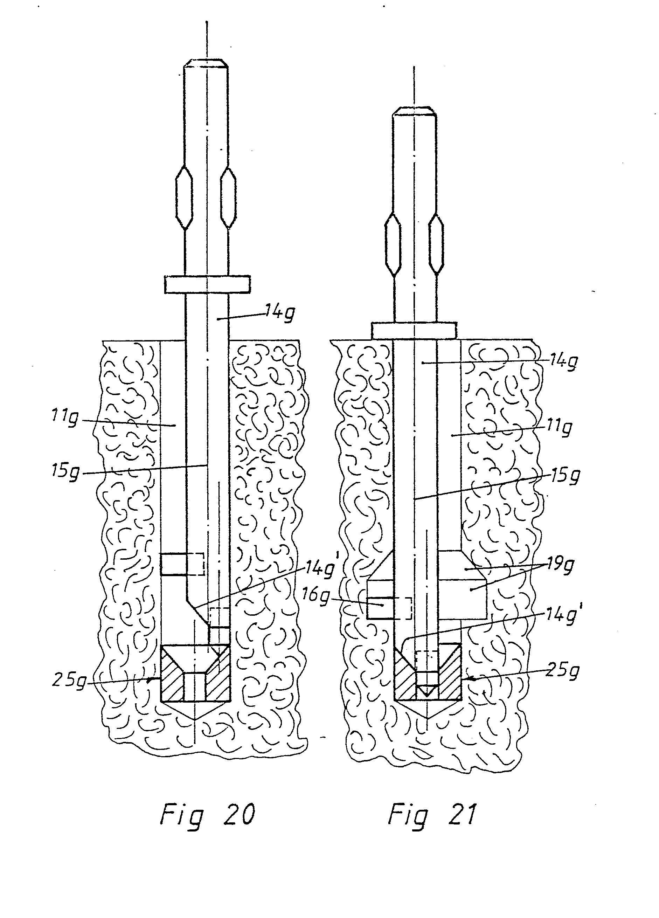

Dadurch wird erreicht, daß das Werkzeug in extrem harten Gestein bzw. Beton im Schlagbohrbetrieb, aber auch in weichem Gestein im Bohrbetrieb einsetzbar ist. Zudem liegen die prinzipiellen Voraussetzungen für die Erzeugung von Hinterschnitten unterschiedlicher Gestalt vor, so daß eine Anpassung an Baukörper unterschiedlicher Materialbeschaffenheit und Härte möglich ist (Fig. 20,21).

Fig 20    Fig 21

## Rotierbares Werkzeug zur Herstellung einer Hinterschneidung in einem Bohrloch.

Die Erfindung bezieht sich auf ein Werkzeug entsprechend dem Oberbegriff des Patentanspruches 1.

Ein bekanntes Bohrwerkzeug dieser Art ist einstückig ausgebildet und weist am vorderen Ende seines in einer abgestumpften Spitze auslaufenden Schaftes eine radial abstehende Nase mit einer Schneide auf. Die abgestumpfte Spitze gleitet beim Hinterschneiden unmittelbar auf der konischen Mantelfläche des Endabschnittes des Bohrloches (DE-GM 77 38 522).

Bei einem bekannten Werkzeug verleichbarer Art (Prospekt der Keil-Werkzeugfabrik Karl Eischeid GmbH, D-5250 Engelskirchen-Loope) führt das beim Hinterschneidvorgang rotierende Werkzeug im axialen Abschnitt seines Hinterschneidorgans ebenfalls eine kreisende Bewegung um die Bohrlochachse aus. Dabei wird der Schaft des Werkzeuges über seine abgeschrägte, als Treibfläche dienende Stirnfläche von einem kugeligen Körper abgestützt. Dieser liegt in dem konisch ausgebildeten Basisabschnitt des Bohrloches. Bei zunehmendem Fortschritt des Hinterschneidvorganges gleitet die auf einer Kreislinie der Kugeloberfläche kreisende Treibfläche des Werkzeuges nach Maßgabe des Räumvorschubes bei gleichzeitiger Axialbewegung auf der Kreislinie radial nach außen. Den Erfordernissen der Praxis nach unterschiedlicher Tiefe und axialer Länge des Hinterschnittes kann daher nur beschränkt Rechnung getragen werden. Der Schaft des Werkzeuges verjüngt sich in Richtung der Treibfläche. Der maximale Durchmesser des Schaftes befindet sich etwa im Bereich des Einganges zum Bohrloch. Bei der kreisenden Bewegung des Hinterschneidorganes wird dort der Schaft an der inneren Oberfläche des Bohrloches abgestützt, dessen lichte Weite annäherungsweise dem maximalen Durchmesser im Eingangsabschnitt entspricht. Infolgedessen wird die kreisende Bewegung im Abschnitt des Hinterschneidorgans in eine spiegelbildlich kreisende Bewegung der das Einsteckende des Werkzeuges aufnehmenden Bohrmaschine bzw. Bohrschlagmaschine übersetzt. Dies erfordert eine verhältnismäßig starke Kreisbewegung im Handgriffsbereich der genannten Maschine. Besteht der Baukörper aus einem weicheren Gestein oder Material, so kann es im Anlagebereich des Schaftes, also am Eingang des Bohrloches, zu Erosionen kommen, durch welche die Haltekraft des Dübels reduziert wird.

Ist eine Hinterschneidung mit einer wesentlich anderen Geometrie erforderlich, so kann dies allenfalls mit Hilfe eines anderen Werkzeuges erreicht werden. Zur Stabilisierung der Lage des kugeligen Abwälzkörpers, dessen Durchmesser wesentlich geringer ist, als die lichte Weite des Bohrloches ist ein axialer Arbeitsdruck erforderlich, der eine untere Grenze nicht unterschreiten sollte. Im übrigen erfordert das Einführen des Abwälzkörpers beim Überkopf-Bohren eine gewisse Geschicklichkeit, die im rauhen Baustellenbetrieb nicht vorausgesetzt werden kann.

Bekannt ist auch ein Hinterschnittwerkzeug für nur drehende Bewegung, bei dem der radiale Räumvorschub des Hinterschneidorgans mit Hilfe einer Arbeitshülse erzeugt wird. Diese ist zu ihrem vorderen Ende hin konisch verjüngt. Sie umschließt den Werkzeugschaft und ist auf diesem axial verschieblich gelagert. Beim Hinterschneidvorgang wird die Arbeitshülse mit Hilfe eines Handgriffes in das Bohrloch hineingeschoben. Dabei stützt sich die konische Matelfläche der Arbeitshülse an der Bohrlochwandung ab und erzeugt dadurch den radialen Räumvorschub. Zudem liegt das + ber das Hinterschneidorgan axial hinausragende Ende des Schaftes mit einer Abrundung oder einer Anphasung am Grund des Bohrloches an. Eine solche Abrundung oder Anphasung ist jedoch nicht geeignet, einen wirksamen Räumvorschub zu erzeugen (EP 0 211 997 A1).

Der Erfindung liegt die Aufgabe zugrunde, ein Werkzeug der eingangs genannten Gattung so weiterzubilden, daß es in extrem hartem Gestein bzw. Beton im Schlagbohrbetrieb und in extrem weichem Gestein im Bohrbetrieb gleichermaßen einsetzbar ist und die prinzipiellen Voraussetzungen für die Erzeugung von Hinterschnitten unterschiedlicher Gestalt vorliegen, so daß eine Anpassung an Baukörper unterschiedlicher Materialbeschaffenheit und Härte, aber auch an extrem unterschiedliche Anforderungen an die Belastung der Verdübelung und an unterschiedliche Verdübelungsarten möglich ist.

Diese Aufgabe wird erfindungsgemäß durch die im Kennzeichen des Patentanspruches 1 genannten Merkmale gelöst.

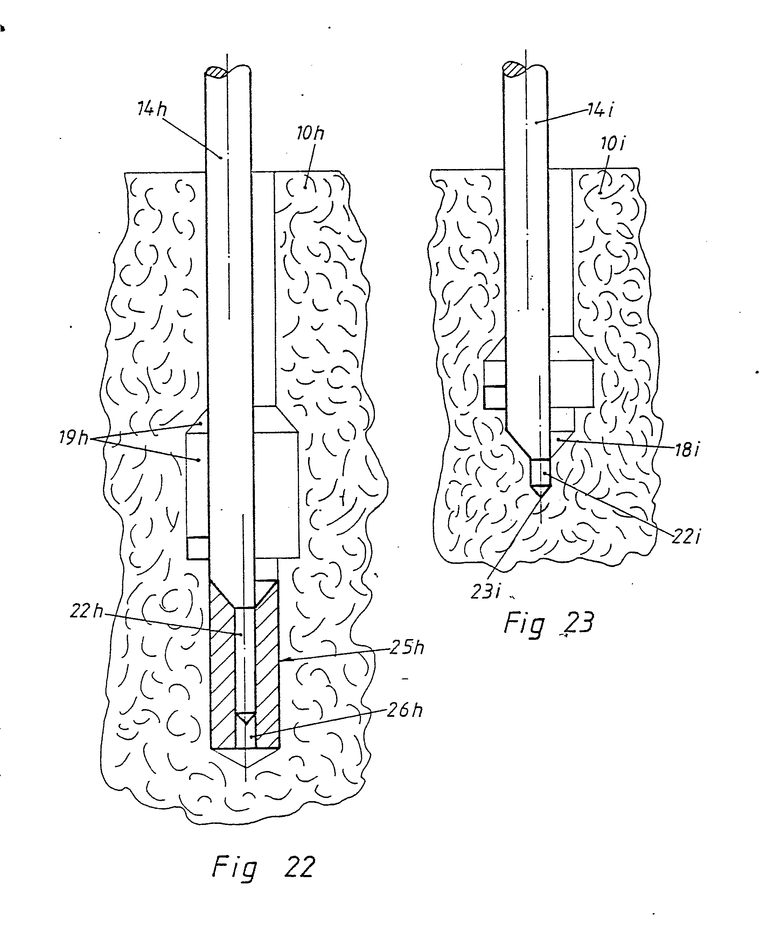

Bei einer solchen Lösung liegen bei wahlweisem drehendem oder drehschlagendem Bohren die prinzipiellen Voraussetzungen für den Einsatz sehr unterschiedlicher Lagerkörper vor, die in den Endabschnitt des Bohrloches unter Zentrierung einführbar sind.Die Lagerkörper führen dank ihrer spezifischen Gestaltung zu entsprechend unterschiedlichen Hinterschnitten. Dies gilt insbesondere auch für die axiale Länge der Hinterschnitte, wenn entsprechend dem Patentanspruch 10 die axiale Länge des mit einer zentralen Bohrung versehenen Lagerkörpers größer ist als die axiale Länge des das Treibelement bildenden Stiftes, welcher beim Hinterschneidvorgang mehr oder weniger in diese zentrale Bohrung eintauchen, oder bei Fehlen eines Lagerkörpers in die Basis des Bohrloches eindringen kann (Fig. 23).

Die Verwendung eines gesonderten Lagerkörpers kann schließlich auch bei der Bearbeitung von Baukörpern aus weicherem Material angezeigt sein. In jedem Fall führt die zwangsläufig herbeigeführte Zentrierung der Spitze des Treibelementes in der Bohrlochachse im Basisabschnitt des Bohrloches zu einer Dämpfung der Vibration. Ein Lagerkörper gemäß einem der Ansprüche 5-7 oder 10 kann somit mehrere Funktionen erfüllen, indem er gewissermaßen eine Armierung des Basisabschnittes des Bohrloches darstellt, die Geometrie des Hinterschnittes bestimmt, das Bohrwerkzeug am Ende des Schneidvorganges verhältnismäßig exakt zentriert und die Geschwindigkeit des Räumfortschrittes an Baukörper unterschiedlicher Härte anpaßt. Letzteres kann durch entsprechende Neigungswinkel der Abwälzfläche geschehen. Zudem sind relativ große Toleranzen hinsichtlich einer Abweichung des Neigungswinkels der Gleitfläche vom Neigungswinkel der Treibfläche möglich.

Nachstehend wird die Erfindung anhand der Zeichnung an einem Ausführungsbeispiel erläutert.

Es zeigen in schematischer Darstellung:

Fig. 1,2 Das in das Bohrloch eingeführte Werkzeug bei Beginn und am Ende des Hinterschneidvorganges bei aufgeschnittenem Baukörper,

Fig. 3,4 eine Variante des Werkzeuges in einer Darstellung gemäß den Fign. 1,2,

Fig. 5,6 Querschnitte nach den Linien V-V und VI-VI der Fign. 1,2 in vergrößerter Darstellung,

Fig. 7,8 Querschnitte nach Linien VII-VII und VIII-VIII der Fign. 3,4 in vergrößerter Darstellung,

Fig. 9,10 und 11,12 weitere Varianten des Werkzeuges in einer Darstellung gemäß den Fign. 1 und 2,

Fig. 13,14 Querschnitte nach Linien XIII-XIII und XIV-XIV der Fign. 9,10 in vergrößerter Darstellung,

Fig. 15,16 Querschnitte nach Linien XV-XV und XVI-XVI der Fig. 11,12 in vergrößerter Darstellung,

Fig. 17 eine Variante des Werkzeuges mit mehreren Schneidorganen,

Fig. 18-21 zwei weitere Varianten des Werkzeuges je bei Beginn und bei Ende des Hinterschneidvorganges je in Verbindung mit einem Lagerkörper,

Fig. 22 eine weitere Variante des Werkzeuges im Zusammenwirken mit einem Lagerkörper extremer Länge am Ende des Hinterschneidvorganges,

Fig. 23 eine weitere Variante des Werkzeuges mit einem radialsymmetrischen Treibelement, das in der letzten Phase des Hinterschneidvorganges in die Basis des Bohrloches eindringt,

Fig. 24-30 weitere Varianten des dem Werkzeug zugeordneten Lagerkörpers, durch welchen die Spitze des Treibelementes am Ende des Hinterschneidvorganges in der Achse des Bohrloches zentrierbar ist.

In den zeichnerisch dargestellten Ausführungsbeispielen des Werkzeuges sind funktionsgleiche oder funktionsähnliche Teile des Werkzeuges und des Lagerkörpers mit fortlaufenden, als Bezugszeichen dienenden Ziffern 1 bis 26 versehen. Diesen Ziffern ist im zweiten Ausführungsbeispiel je der Buchstabe "a", im dritten Ausführungsbeispiel der Buchstabe "b", im vierten Ausführungsbeispiel der Buchstabe "c" usw. als unterscheidendes Symbol hinzugefügt.

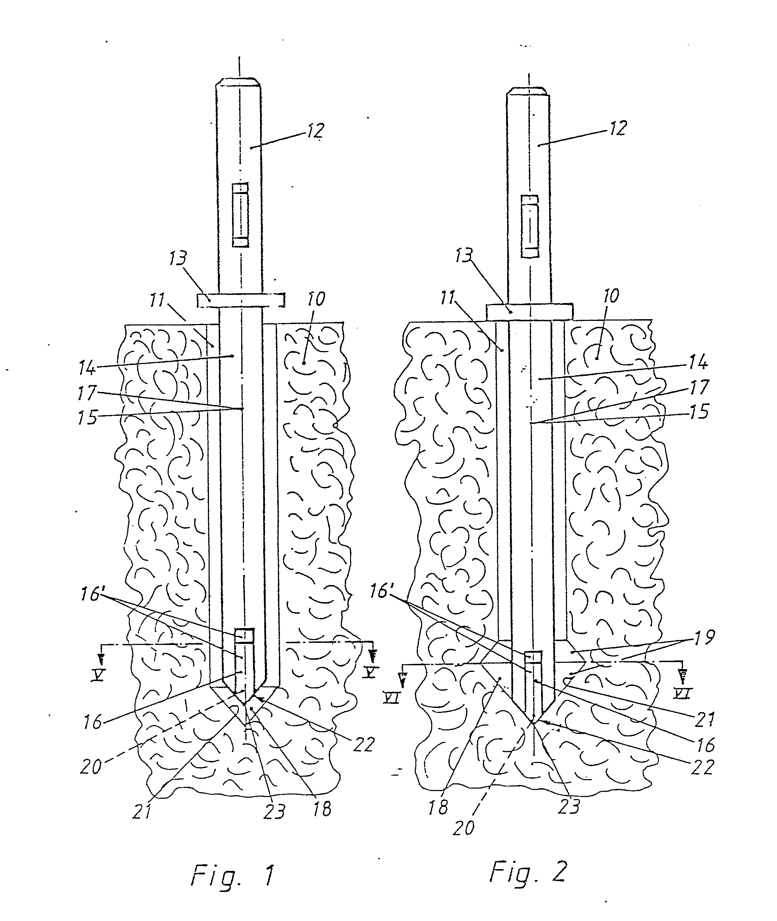

Wie in den Fign. 1 und 2 verdeutlicht, dient das rotierbare Werkzeug zur Herstellung wenigstens einer Hinterschneidung 19 in einem vorgefertigten, konisch auslaufenden Bohrloch 11. Der Schaft 14 des Werkzeuges läuft in ein rückwärtiges Einsteckende 12 zur Aufnahme in einer Bohr-oder Schlagbohrmaschine aus. Ein Hinterschneidorgan 16 ragt zum Hinterschneiden des Bohrloches 11 radial aus dem Schaft 14 hervor. Eine zur Bohrlochachse 17 geneigte Treibfläche 20 arbeitet mit einer korrespondierenden Gleitfläche 21 im Bohrloch zusammen. Die Treibfläche 20 erzeugt dabei im Gefolge eines axialen Arbeitsdruckes auf das Werkzeug einen radialen Räumvorschub des Hinterschneidorgans 16. Bei Beginn des Hinterschneidvorganges liegt die Treibfläche 20 an der Gleitfläche 21 und die Räumkante 16′ des Hinterschneidorgans 16 bei ungefährer radialer Orientierung an der Innenwand des Bohrloches 11 an. Die Achse 15 des Werkzeuges liegt annäherungsweise in einer durch die Bohrlochachse 17 und das Hinterschneidorgan 16 gehenden Ebene, die im folgenden als Achsenebene a-a bezeichnet wird. Die Treibfläche 20 ist durch die Stirnfläche des keilartigen Teiles einer als Hinterschneidorgan 16 und zugleich als Treibelement 22 dienenden verschleißfesten Platte (Hartmetallplatte) gebildet. Das Treibelement 22 ist derart stirnseitig am Schaft 14 des Werkzeuges angeordnet, daß seine etwa in der Achsenebene a-a liegende Spitze 23 beim Hinterschneidvorgang aus einer Ausgangsstellung, in welcher sie sich im Abstand von der Bohrlochachse 17 befindet, in eine Endstellung führbar ist, in welcher sie etwa in der Bohrlochachse 17 liegt. Im Ausführungsbeispiel der Fign. 1,2,5,6 sowie der Fign. 2,3,7,8 ist das Treibelement 22;22a durch die im Schaft 14;14a eingebettete Hartmetallplatte gebildet, die die geometrische Grundform eines unregelmäßigen Fünfeckes aufweist. Ein Abschnitt dieser mittig im Schaft 14;14a eingebetteten Hartmetallplatte, der etwa die geometrische Grundform eines gleichschenkligen Dreieckes aufweist, springt aus dem Schaft hervor. Die einen Winkel zueinander einschließenden Kanten 16',16a' bilden die Räumkanten des Hinterschneidorgans 16;16a. Eine Stirnkante, die axial aus dem Schaft 14;14a hervortritt, bildet die Treibfläche 20;20a, die im zeichnerisch dargestellten Ausführungsbeispiel den gleichen Winkel zur Bohrlochachse 17;17a einschließt, wie die Innenwandung des konisch auslaufenden Endabschnittes 18;18a des Bohrloches 11;11a. Die dem Endabschnitt 18;18a zugewandte Kante 16';16a' der Hartmetallplatte ist bis zur Spitze 23;23a des Treibelementes 22;22a verlängert und schließt den gleichen Winkel zur Vertikalen ein wie die die Treibfläche 20;20a bildende Stirnkante. Insoweit kommt dem durch einen Teil der Hartmetallschneide gebildeten Treibelement 22;22a eine Symmetrieebene 28';28a' zu. Somit ist die Spitze 23;23a des Treibelementes in den Ausführungsbeispielen der Fign. 1-8 durch einen Scheitel gebildet, in dem die die Treibfläche 20;20a bildende Stirnkante der Hartmetallschneide mit ihrer benachbarten Räumkante 16';16a' zusammenstößt.

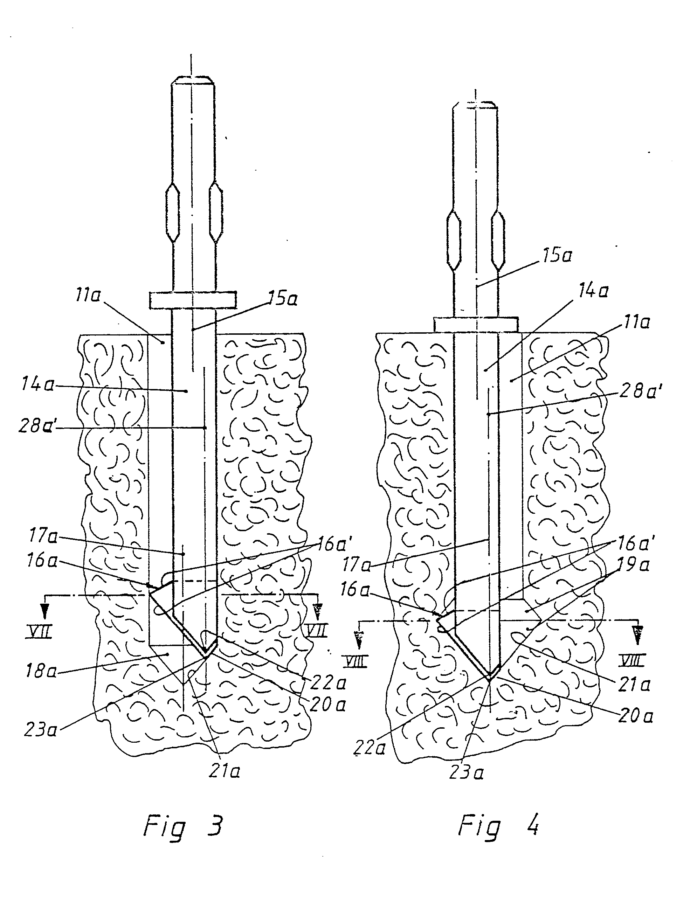

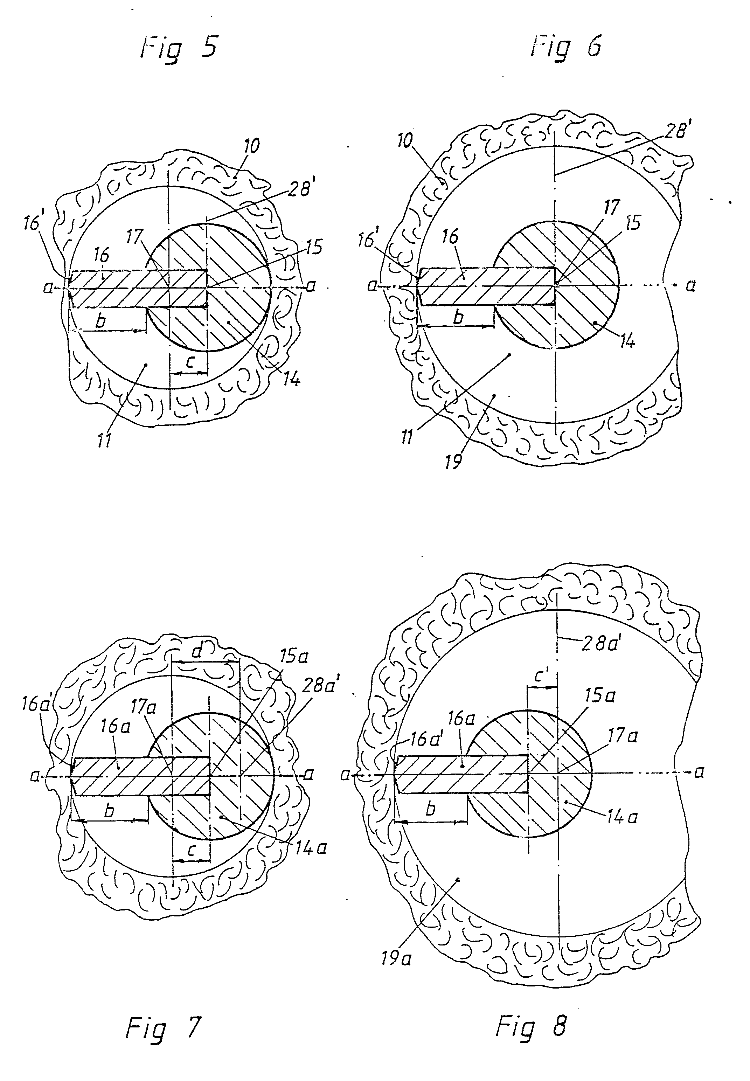

Das Ausführungsbeispiel der Fign 1,2,5,6 unterscheidet sich vom Ausführungsbeispiel der Fign. 3,4,7,8 im wesentlichen dadurch, daß in einem Falle die Symmetrieebene 28' (Fig. 5,6) mit der Achse 15 des Werkzeuges zusammenfällt und im anderen Falle die Symmetrieebene 28a' (Fig. 3,4;7,8) im Abstand zur Symmetrieachse 15a des Werkzeuges liegt.

Beim Hinterschneidvorgang gelangt das Werkzeug aus der Ausgangsposition gemäß den Fign. 1,3,5,7 in eine Endposition gemäß den Fign. 2,4,6,8. Während dieses Hinterschneidvorganges beschreibt das Werkzeug wenigstens im axialen Abschnitt der sich bildenden Hinterschneidung 19;19a mit seiner Spitze 23;23a eine kreisende Bewegung um die Bohrlochachse 17;17a von zunehmend geringerem Radius. Bei dieser kreisenden Bewegung, die zugleich von einer begrenzten axialen Bewegung begleitet ist, wird die Treibfläche 20;20a an der Gleitfläche 21;21a abgestützt und geführt. Am Ende des Hinterschneidvorganges liegt der genannte Punkt etwa im Zentrum des Endabschnittes 18;18a. Dabei liegt im Ausführungsbeispiel der Fign. 1,2,5,6 die Achse 15 des Werkzeuges konzentrisch zu dem genannten Zentrum des Endabschnittes 18. Hingegen liegt im Beispiel der Fig. 3,4,7,8 die Achse 15a des Werkzeuges bei Beginn des Hinterschneidvorganges auf der dem Hinterschneidorgan 16a abgewandten Seite der Bohrlochachse 17a in der Achsenebene a-a und am Ende des Hinterschneidvorganges auf der dem Hinterschneidorgan 16a zugewandten Seite der Bohrlochachse in der genannten Achsenebene a-a. Die exzentrische Anordnung der Spitze 23a zur Werkzeugachse 15a im Beispiel der Fig. 3,4,7,8 führt erwünschterweise zu einer Hinterschneidung größeren Durchmessers im Vergleich zum Beispiel der Fig. 1,2,5,6. Wie aus den Fign. ersichtlich, ist die Geometrie der Hinterschneidung am axialen Eingangsabschnitt im wesentlichen durch den Winkel bestimmt, den die Treibfläche 20;20a bzw. die Gleitfläche 21;21a zur Vertikalen einschließt. In dem dem Endabschnitt 18;18a zugewandten axialen Endabschnitt der Hinterschneidung ist deren Geometrie durch die Gestalt des Hinterschneidorganes bestimmt.

In Fig. 7 ist der Abstand zwischen der Symmetrieachse 28a' und der Bohrlochachse 17a mit "d" bezeichnet.

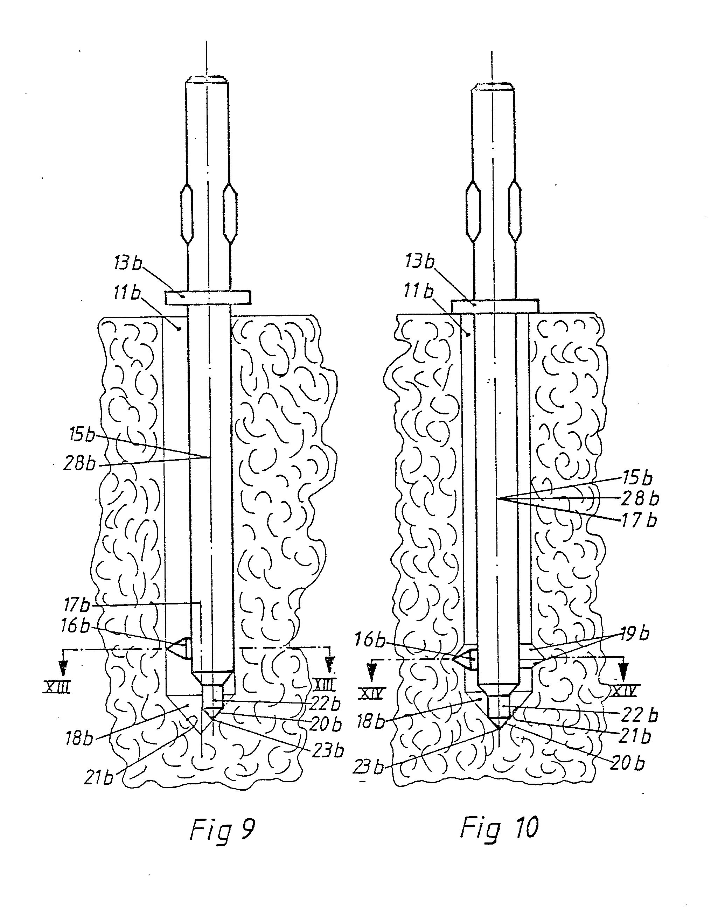

Die weiteren Ausführungsbeispiele unterscheiden sich von den beschriebenen Ausführungsbeispielen wie folgt: Im Ausführungsbeispiel der Fign. 9,10 sind Hinterschneidorgan und Treibelement je durch einen Hartmetallstift gebildet, dessen freies Ende kegelartig gestaltet ist. Die Symmetrieachse 28b des radialsymmetrischen Treibelementes 22b fällt mit der Werkzeugachse 15b zusammen. Dies gilt somit auch für die durch die Mantelfläche des kegelartigen Endes des Treibelementes 22b gebildete Treibfläche 20b. Diese gleitet beim Hinterschneidvorgang an der Gleitfläche 21b, die durch die innere Mantelfläche des Bohrloches 11b im Endabschnitt 18b gebildet ist. Ihr Neigungswinkel entspricht dem Neigungswinkel der Treibfläche 20b. Die axiale Bewegung des Werkzeuges beim Hinterschneidvorgang wird bei Erreichen der Position gemäß Fig. 10 durch die Anlage des flanschartigen Anschlages 13b an der Stirnseite des Baukörpers beendet. Für besondere Anwendungszwecke kann das Hinterschneidorgan 16b durch ein plattenformiges Hartmetallelement gebildet sein, das wie das Hinterschneidorgan in den Beispielen der Fign. 1,2 und 3,4 radial aus dem Schaft hervorragt, während das Treibelement wie im Beispiel der Fign. 9,10 gestaltet ist.

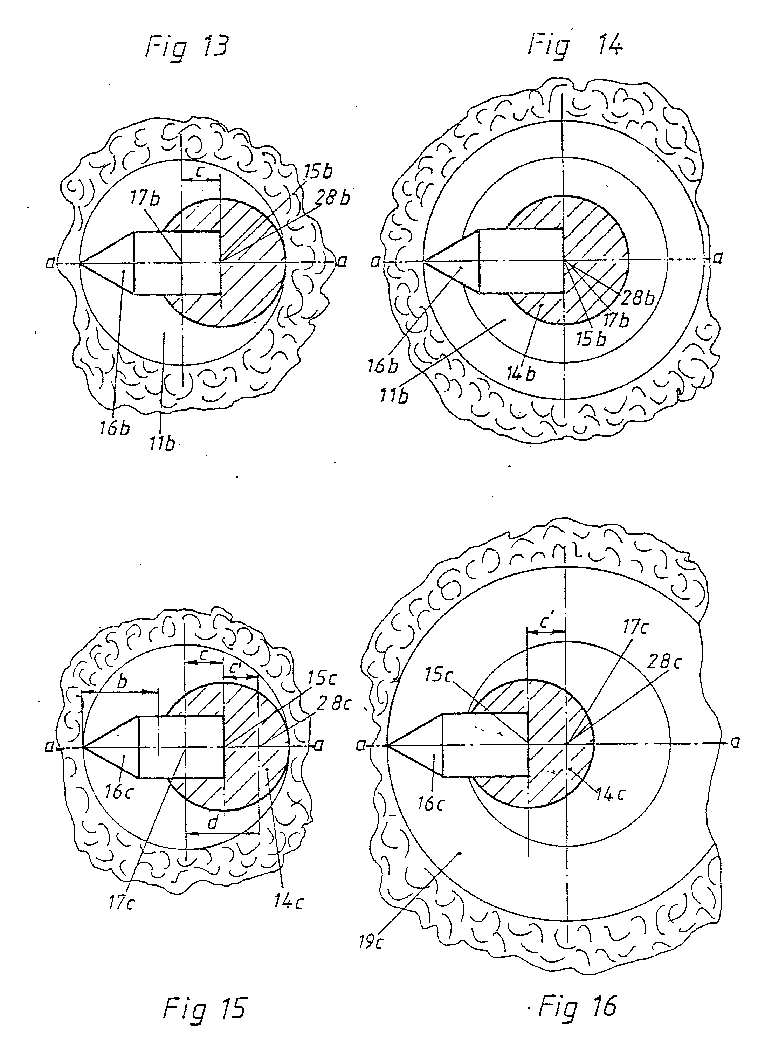

Wie aus den Fign. 13,14 ersichtlich, welche vergrößerte Querschnitte nach den Linien XIII-XIII und XIV-XIV in den Fign. 9 und 10 darstellen, ist die radiale Tiefe der fertigen Hinterschneidung (Fig. 14) durch den Abstand c der Werkzeugachse 15b bzw. der Symmetrieachse 28b (Fig. 13) von der Bohrlochachse 17b bestimmt.

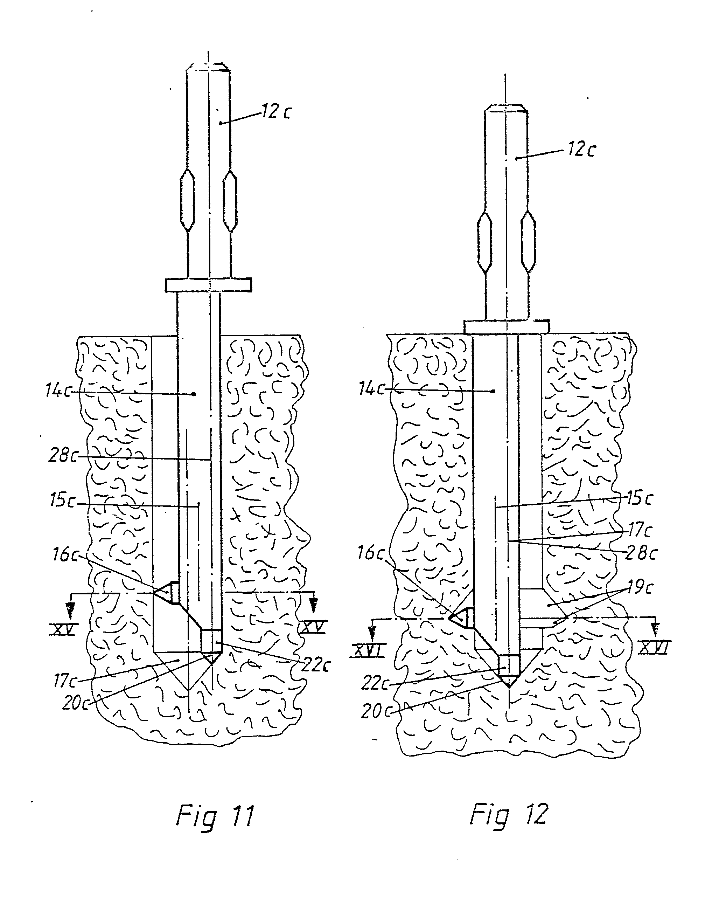

Das Ausführungsbeispiel der Fign. 11 und 12,15,16 unterscheidet sich vom Ausführungsbeispiel der Fign. 9,10,13,14 dadurch, daß die Symmetrieachse 28c des Treibelementes 22c bzw. der Treibfläche 20c zwecks Erzielung einer größeren Hinterschneidung exzentrisch zur Werkzeugachse 15c angeordnet ist. Demzufolge befindet sich beim Beginn des Hinterschneidvorganges die Werkzeugachse 15c wie beim Beispiel der Fign. 9,10,13,14 im Abstand c von der Bohrlochachse 17c. Am Ende des Hinterschneidvorganges befindet sich jedoch die Werkzeugachse 15c in der Achsenebene a-a auf der dem Hinterschneidorgan 16c zugewandten Seite im Abstand c' zur Bohrlochachse 17c.

Wie aus Fig. 11 ersichtlich, ist das Einsteckende 12c gegenüber dem Schaft 14c derart radial versetzt, daß die Achse dieses Einsteckendes mit der Achse 28c des Treibelementes 22c zusammenfällt. Dadurch können am Ende des Hinterschneidvorganges die Achse des Einsteckendes, die Symmetrieachse 28c und die Bohrlochachse zusammenfallen. Dies kann zu einer zunehmenden Dämpfung der Vibrationen gegen des Ende des Hinterschneidvorganges führen.

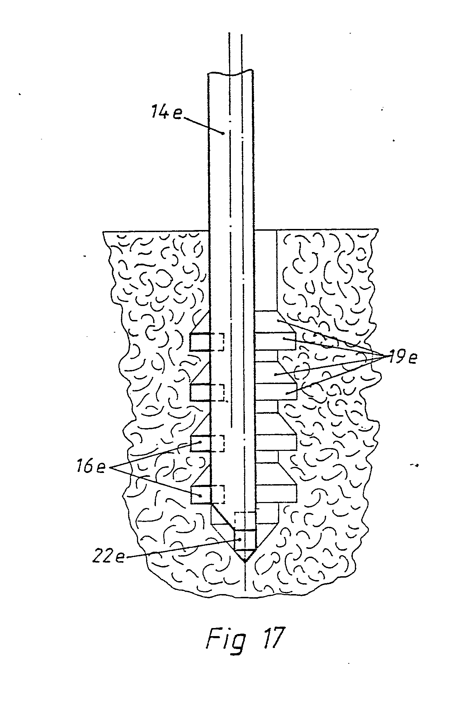

Im Ausführungsbeispiel der Fig. 17 sind als Hinterschneidorgane 16e mehrere Werkzeugschneiden am Schaft 14e des Werkzeuges in gleichem axialen Abstand voneinander angeordnet. Daher ergeben sich beim Hinterschneidvorgang mehrere Hinterschneidungen 19e gleicher Geometrie in einem Arbeitsgang.

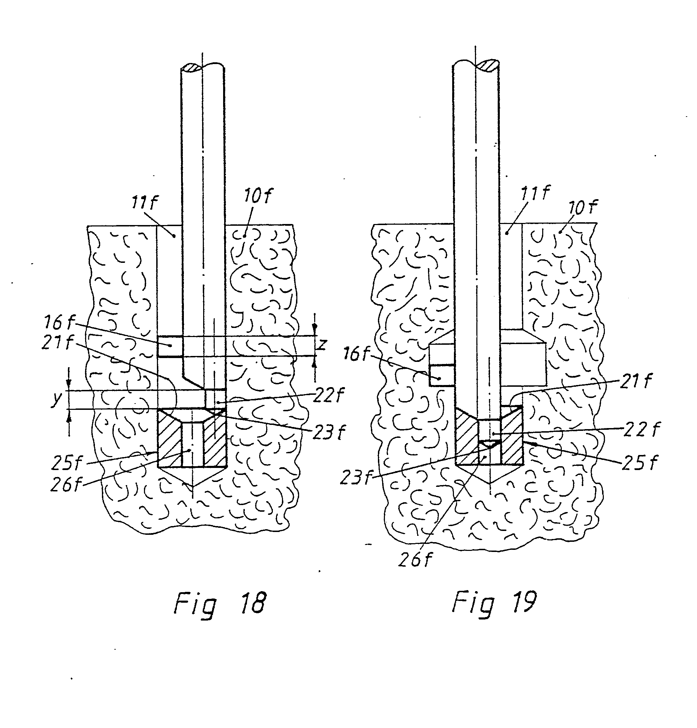

In dem Ausführungsbeispiel der Fign. 18 und 19 ist als Hinterschneidorgan eine Werkzeugschneide 16f vorgesehen, die so gestaltet ist wie im Beispiel der Fig. 17. Dies gilt auch für das Treibelement 22f im Verhältnis zum Treibelement 22e der Fig. 17. Wesentlich ist für das Beispiel der Fign. 18 und 19 die Anordnung eines Lagerkörpers 25f im zylindrischen Endabschnitt des Bohrloches 11f, der mit einer zentralen Bohrung 26f versehen ist. Die lichte Weite der Bohrung 26f entspricht dem Durchmesser des radialsymmetrischen Treibelementes 22f in seinem zylindrischen Abschnitt. Die Gleitfläche 21f ist durch eine kegelförmige Vertiefung im Lagerkörper 25f gebildet. Im Vergleich zu den oben beschriebenen Ausführungsbeispielen ist nunmehr die Gleitfläche 21f durch die Stirnfläche des vorzugsweise aus Stahl gebildeten Lagerkörpers 25f gebildet. Durch die extreme Schlagfestigkeit der Gleitfläche 21f ist sichergestellt, daß die Spitze 23f des Treibelementes 22f beim Hinterschneidvorgang durch die Gleitfläche 21f genau geführt wird, und zwar unabhängig von der Materialbeschaffenheit des Baukörpers 10f, so daß die konzentrische Lage der fertigen Hinterschneidung sichergestellt ist. Die axiale Tiefe der Hinterschneidung entspricht der axialen Länge y des zylindrischen Abschnittes des Treibelementes 22f plus der axialen Erstreckung z des Schneidorgans (Fig. 18).

Die Variante der Fign. 20,21 verdeutlicht, daß der konische Eingangsabschnitt der Hinterschneidung 19g hinsichtlich seines Neigungswinkels vom Neigungswinkel der Gleitfläche 21g des Lagerkörpers 25g bestimmt ist. Die Gleitfläche 21g und die Treibfläche 20g schließen einen Winkel zur Vertikalen ein, der relativ klein ist. Dementsprechend klein ist auch der Winkel, welcher die Stirnfläche des Schaftes 14g im kegelförmigen Bereich 14g' zur Vertikalen einschließt.

Im Ausführungsbeispiel der Fig. 22 ist der Lagerkörper 25h extrem lang und länger als das Treibelement 22h. Dadurch können Hinterschneidungen 19h von sehr großer axialer Tiefe hergestellt werden.

Diese Tiefe ist insofern bestimmbar, als der Hinterschneidvorgang bei unterschiedlicher Eindringtiefe des Treibelementes 22h in die Bohrung 26h beendet werden kann.

Beim Ausführungsbeispiel der Fig. 23 dringt das Treibelement 22i mit seiner Spitze 23i bei länger anhaltendem Schlagen so weit in das Material des Baukörpers 10i ein, bis der konische Bereich der Stirnfläche des Schaftes 14i auf der Innenwandung des konisch auslaufenden Endabschnittes 18i aufsitzt. Demzufolge ist eine Hinterschneidung von größerer axialer Länge erreichbar.

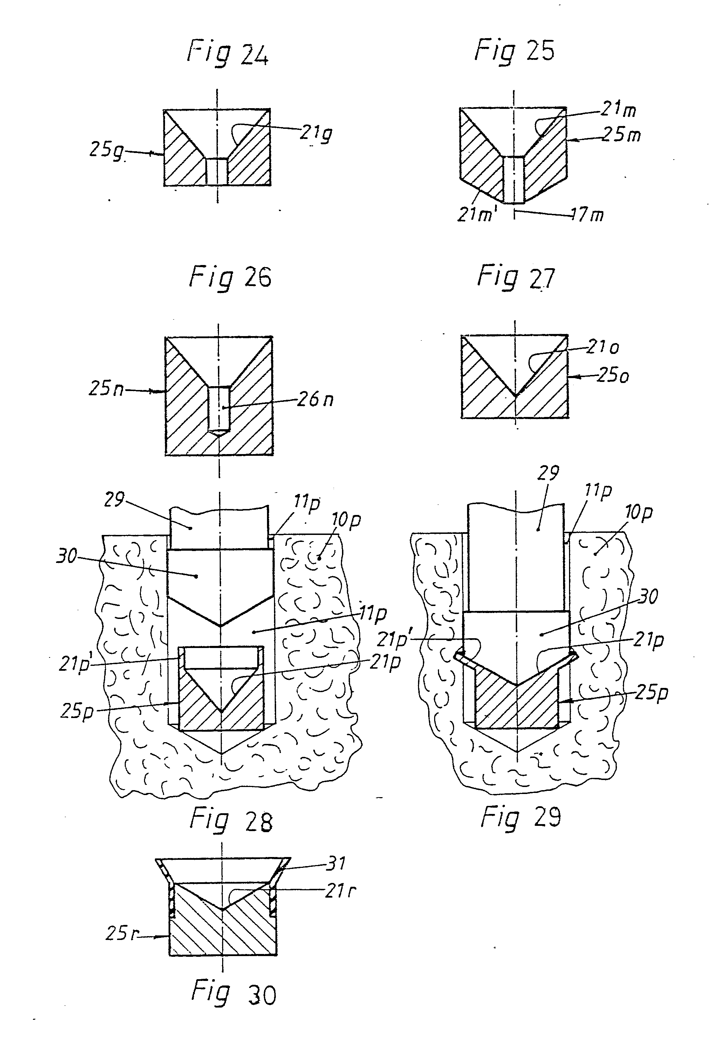

Der Lagerkörper 25m in Fig. 25 weist eine kegelförmige Auflagefläche 21m' auf, deren Neigung der Innenwandung im konisch auslaufenden Endabschnitt des zugehörigen Bohrloches entspricht. Dadurch ergibt sich eine exakte Zentrierung des Lagerkörpers 25m auch dann, wenn dessen Durchmesser geringfügig geringer ist als die lichte Weite des Bohrloches. Die Gleitfläche 21m schließt zur Bohrlochachse 17m einen kleineren Winkel ein als die Auflagefläche 21m'. Dies verdeutlicht, daß mit Hilfe der Zuordnung unterschiedlicher Lagerkörper zum Werkzeug entsprechend den jeweiligen Erfordernissen an die Geometrie der Hinterschneidung Gleitflächen 21m (und dementsprechend der Treibflächen) gewählt werden können, die kleiner oder größer sind als der in der Regel feststehende Neigungswinkel, welcher der konisch auslaufende Endabschnitt im Bohrloch zur Vertikalen einschließt.

Beim Lagerkörper 25n in Fig. 26 ist die zentrale Bohrung 26n eine Sacklochbohrung. Der Lagerkörper 25 o mit Gleitfläche 21 o in Fig. 27 ist zu bevorzugen, wenn das Gestein des Baukörpers zu weich ist, um die Treibfläche des Treibelementes im konisch auslaufenden Endabschnitt des Bohrloches exakt zu führen. Der Lagerkörper 25 o hat insoweit im wesentlichen Armierungsfunktion.

Im Ausführungsbeispiel der Fig. 28,30 ist der Durchmesser des Lagerkörpers 25p kleiner als die lichte Weite des Bohrloches 11p. Eine Zentrierung des Lagerkörpers 25p im Bohrloch wird mit Hilfe eines die rotationssymmetrische Gleitfläche 21p vergrößernden, radial ausgebogenen Kragens 21p' hergestellt, der sich im Baukörper 10p verkrallt. Wie aus den Fign, erkennbar, wird der Kragen 21p' aus einer axialen Lage (Fig. 28) mit Hilfe eines Werkzeuges 29 mit konisch auslaufendem Kopf 30 derart ausgebogen, daß sich eine Gleitfläche 21p,21p' von einheitlichem Neigungswinkel ergibt.

Im Beispiel der Fig. 30 ist der Lagerkörper 25r mit Gleitfläche 21r mit Hilfe einer Kunststoffmanschette 31 mit Bohrloch zentrier-und fixierbar.

Die Kunststoffmanschette 31 umschließt den Lagerkörper 25r in einem oberen Abschnitt geringeren Durchmessers und ist in einem oberen Abschnitt radial aufgeweitet.

**Ansprüche**

1. Rotierbares Werkzeug zur Herstellung wenigstens einer Hinterschneidung (19) in einem vorgefertigten Bohrloch (11) mit konisch auslaufendem Endabschnitt (Bohrlochendabschnitt), mit einem Schaft (14) der in ein rückwärtiges Einsteckende (12) zur Aufnahme in einer Bohrmaschine ausläuft,
mit einem Hinterschneidorgan (16), das zum Hinterschneiden des Bohrloches (11) radial aus dem zylindrischen Schaft (14) hervorragt, dessen Durchmesser etwa um die radiale Abmessung (b in Fig. 5-8,13) des Hinterschneidorgans (16) kleiner ist als die lichte Weite des Bohrloches (11),
sowie mit einem Treibprofil am freien Ende des Schaftes (14), das mit der konischen Mantelfläche des Bohrlochendabschnittes zusammenarbeitet und dabei im Gefolge eines axialen Arbeitsdruckes auf das kreisende Werkzeug einen radialen Räumvorschub des Hinterschneidorgans (16) erzeugt,
wobei die Achse (15) des mit seinem Treibprofil an der Gleitfläche (21) anliegenden Werkzeuges annäherungsweise in einer durch die Bohrlochachse (17) und das Hinterschneidorgan (16) gehenden Ebene (Achsebene a-a in Fig. 5-8;13-16) aus einer Ausgangsstellung, in welcher sie sich im Abstand von der Bohrlochachse (17) befindet, in eine Endstellung führbar ist, in welcher sie etwa in der Bohrlochachse (17) liegt,
dadurch gekennzeichnet, daß das Treibprofil durch die Stirnfläche (Treibfläche 20) eines gesonderten, in den Schaft (14) eingebetteten und aus diesem axial vorspringenden Treibelementes (22 (als Bestandteil von 16) in Fig. 1-8; 22 in Fig. 9-12,17,23) gebildet und wenigstens ein die Gleitfläche (21) bildender, bedarfsweise unter Zentrierung in das Bohrloch (11) einfügbarer Lagerkörper (Fig. 25f-25h in Fig. 18-22; 25m-25s in Fig. 25-31) vorgesehen ist.

2. Werkzeug nach Patentanspruch 1, dadurch gekennzeichnet, daß das Treibelement (22) eine zugleich als Hinterschneidorgan (16) dienende, symmetrisch zur Achsenebene (a-a in Fig. 5-8) in den Schaft (14) eingebettete, verschleißfeste Platte ist.

3. Werkzeug nach Patentanspruch 1, dadurch gekennzeichnet, daß als Hinterschneidorgan (16) und/oder als Treibelement (22) je ein kegelartig auslaufender im Schaft (14) verankerter zylindrischer Stift vorgesehen ist (Fig. 9-23).

4. Werkzeug nach einem der vorhergehenden Patentansprüche, dadurch gekennzeichnet, daß der Durchmesser des zylindrischen Lagerkörpers (25f-25h in Fig. 18-22) der lichten Weite des Bohrloches (11) entspricht.

5. Werkzeug nach Patentanspruch 3, dadurch gekennzeichnet, daß die Symmetrieachse bzw. Symmetrieebene (28 bzw. 28') des in eine Spitze (23) auslaufenden Treibelementes (22) exzentrisch zur Werkzeugachse (15) liegt (Fig. 3,4,7,8,11,12,15-23).

6. Werkzeug nach einem der vorhergehenden Patentansprüche, dadurch gekennzeichnet, daß der zylindrische Lagerkörper (25f-25h in Fig. 18-22) eine zentrale Bohrung (26f,26h) aufweist, deren lichte Weite mindestens so groß oder größer ist als der Durchmesser des das Treibelement (22f-22h) bildenden Stiftes (Fig. 18-22, 24-26).

7. Werkzeug nach einem der vorhergehenden Patentansprüche, dadurch gekennzeichnet, daß der zylindrische Lagerkörper (25p) einen die rotationssymetrische Gleitfläche (21p) vergrößernden, radial ausgebogenen Kragen (21p') aufweist (Fig. 28,29).

8. Werkzeug nach Patentanspruch 7, dadurch gekennzeichnet, daß der zylindrische Lagerkörper (25r) von einer Kunststoffmanschette (31) partiell umschlossen und diese in einem den Lagerkörper (25r) überragenden Abschnitt radial aufgeweitet ist (Fig. 30).

9. Werkzeug nach einem der vorhergehenden Patentansprüche, dadurch gekennzeichnet, daß das Einsteckende (12c) und der Schaft (14c) radial gegeneinander versetzt sind, wobei die Achse des Einsteckendes (12c) koaxial zur Symmetrieachse (28c) des Treibelementes (20c) liegt (Fig. 11,12).

10. Werkzeug nach einem der vorhergehenden Patentansprüche, dadurch gekennzeichnet, daß die axiale Länge des mit einer zentralen Bohrung (26h) versehenen Lagerkörpers (25h) größer ist als die axiale Länge des das Treibelement (22h) bildenden Stiftes (Fig. 22).

Fig. 1        Fig. 2

0 289 988

Fig 3

Fig 4

Fig 5

Fig 6

Fig 7

Fig 8

0 289 988

Fig 9

Fig 10

0 289 988

Fig 11

Fig 12

## Fig 13

## Fig 14

## Fig 15

## Fig 16

Fig 17

Fig 18

Fig 19

*Fig 20*

*Fig 21*

14h

10h

19h

22h

25h

26h

Fig 22

14i

10i

18i

22i

23i

Fig 23

Fig 24

25g — 21g

Fig 25

21m
25m
21m' — 17m

Fig 26

25n — 26n

Fig 27

21o
25o

29
11p
10p
30
11p
21p'
21p
25p

Fig 28

29
11p
10p
30
21p'
21p
25p

Fig 29

31
21r
25r

Fig 30

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | GB-A-2 147 036 (PERSSON) <br> * Figur 1; Seite 3, Zeilen 108-117 * | 1,2 | E 21 B 7/28 <br> E 21 B 10/26 <br> E 21 B 10/58 <br> E 21 B 7/08 <br> B 23 B 51/00 |
| Y | --- | 3-5,9 | |
| X | FR-A-2 440 464 (PEROT) <br> * Anspruch 1 * | 1,2 | |
| Y | US-A-2 532 783 (PHIPPS) <br> * Spalte 4, Zeilen 43-57 * <br> --- | 3 | |
| Y | US-A-2 362 529 (BARRETT) <br> * Seite 1, rechte Spalte, Zeilen 25-28; Seite 1, linke Spalte, Zeilen 50-55 * <br> --- | 4 | |
| Y | DE-C- 910 376 (JUNKERS FLUGZEUG UND MOTORENWERKE GmbH) <br> * Seite 1, Zeilen 84-89; Figuren 4,5 * <br> --- | 5,9 | |
| Y | US-A-3 001 423 (ELLIOTT) <br> * Insgesamt * <br> --- | 1 | |
| Y | GB-A-2 163 075 (SARKIS S.A.) <br> * Zusammenfassung * <br> --- | 1 | **RECHERCHIERTE SACHGEBIETE (Int. Cl.4)** |
| P,A | EP-A-0 242 638 (EISCHEID) <br> * Insgesamt * <br> --- | 1,4 | E 21 B <br> B 28 D <br> B 23 B |
| A | GB-A- 961 449 (LOWE) <br> * Insgesamt * <br> --- | 1,2 | |
| A | DE-C-3 414 206 (NORTON CHRISTENSEN) <br> * Insgesamt * <br> --- | 1 | |
| A,D | DE-U-7 738 522 (MILLICH) <br> --- | | |
| A,D | EP-A-0 211 997 (FIRMA MÄCHTLE GmbH) <br> ----- | | |

Der vorliegende Recherchenbericht wurde für alle Patentansprüche erstellt

| Recherchenort | Abschlußdatum der Recherche | Prüfer |
|---|---|---|
| DEN HAAG | 19-08-1988 | SOGNO M.G. |

EPO FORM 1503 03.82 (P0403)

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
................................................................
& : Mitglied der gleichen Patentfamilie, übereinstimmendes Dokument